# EUROPEAN PATENT APPLICATION

(11) **EP 3 835 818 A1**
(43) Date of publication of application: **16.06.2021**
(21) Application number: 19215819.4
(22) Date of filing: 12.12.2019
(51) Int. Cl.: G01S 7/484, G01S 17/26

(54) **IMPROVED LIDAR WITH REDUCED PHOTON NOISE**

(71) Applicant: Hexagon Technology Center GmbH, 9435 Heerbrugg (CH)
(72) Inventor: HINDERLING, Jürg, CH-9437 Marbach (CH); STUTZ, Reto, CH-9434 Au (CH)
(74) Representative: Kaminski Harmann

(57) **Abstract**

Distance measuring device for geodetic or industrial distance measurement according to the pulse time-of-flight principle, the distance measuring device comprising a light generator (1) configured to emit at least one pulsed light signal to a target (5), wherein the pulsed light signal has a pulse form envelope (10), a receiving circuit (8) having a detector configured for detecting at least part of the light signal returning from the target (5), wherein the receive signal is extracted in such a way as to be comparable to the pulse form envelope (10), and an evaluation unit (9) configured for determining the time of flight of the pulsed light signal on the basis of the receive signal, wherein a start time of the pulsed light signal is determined, particularly based on the time of occurrence of a feature in the emitted pulse form envelope of the emitted pulsed light signal, and a stop time is determined based on the time of occurrence of a feature in the receive signal, particularly the same feature as the feature used for determining the start time, wherein the difference between the stop and start time is used for determining the distance to the target, wherein the distance measuring device is configured in such a way that the at least one pulsed light signal generated by the light generator (1) is comprised of sub-pulses (13) provided with a repetition rate of at least 1GHz, wherein the sub-pulses (13) contained in the pulsed light signal preserve the pulse form envelope (10) of the pulsed light signal.

## Description

The present invention relates to a distance measuring device using electromagnetic radiation for geodetic or industrial distance measurement using a pulse time-of-flight principle.

Pulse time-of-flight distance measurement is a well-known method for distance measurement. A pulse is sent out by a distance measuring device, for example, and a start time at which the pulse is emitted is either optoelectronically measured by an internal reference path as described in EP3489714 or EP05744805 or obtained from the control electronics used for controlling the electromagnetic source generating the pulse. Such a start time is associated to the occurrence of an event in the pulse, a typical event being for example the zero crossing of the first derivative of the pulsed signal. The emitted pulse is then typically dispersed and scattered by a target hit by the pulse. The returning pulse is then detected and further processed. The processing of the detected returned pulse is done preferably in the same way as for the start pulse signal to get the stop time at which the typical event occurs in the detected returned pulse. The difference of stop time and start time implicitly encodes the distance to the target.

Laser range-finding and light detection and ranging (Lidar) is under continuous development. Improving accuracy and distance jitter of the sensor at short and mid ranges would open new applications for example in the field of industrial use cases. In the meantime, lidar systems have achieved accuracy levels where the limiting noise source is given by the irregularity or granularity of the photons in the received signal. One source of this temporal irregularity is the temporal uncertainty of the photons in the emitted pulses. Low temporal jitter of the photons in a signal is important for a high accuracy when the lidar operates in single shot detection mode as there is no reduction of distance jitter which may be obtained by repeating the measurement. The quality of a pulse time-of-flight distance measuring device depends partly on the pulse quality and the evaluation electronics, pulse quality relating to the degree to which a nominal prescribed pulse is actually generated by the electromagnetic source. Deviations from the nominal shape in general lead to a worse distance estimation result.

Reliable pulse generation is therefore vital for achieving high-quality distance measurements.

According to the laws of quantum mechanics of the electromagnetic radiation, phase and photon number of light are not exactly defined, both properties are corrupted with noise. Therefore, intensity and time of an arriving optical signal show some fluctuation or jitter. Coherent light emitted by laser sources also possesses inherent fluctuations. Amplitude and phase of a coherent light beam are rather well defined; the photon number inside a time interval such as given by a pulse, however, is distributed according to the Poisson distribution.

It is therefore an objective of the present invention to provide an improved pulse time-of-flight distance measuring device.

This objective is achieved by realizing at least part of the features of the independent claim. Features which further develop the invention in an alternative or advantageous manner are described in the dependent patent claims.

The invention relates to a distance measuring device for geodetic or industrial distance measurement according to the pulse time-of-flight principle. The ranging device can be used in measurement instruments such as precision 3D scanners for recording target surfaces using single or multiple transmission and reception channels, or in instruments such as laser trackers or theodolites, e.g. for monitoring applications. The distance measuring device comprises a light generator configured to emit at least one pulsed light signal to a target, wherein the pulsed light signal has a pulse form envelope, a receiving circuit having a detector configured for detecting at least part of the light signal returning from the target, and, for example, signal processing electronics downstream from the detector for filtering the detected light signal to provide a receive signal, wherein the receive signal is extracted in such a way as to be comparable to the pulse form envelope, and an evaluation unit configured for determining the time of flight of the pulsed light signal on the basis of the receive signal, wherein a start time is associated to the pulsed light signal, particularly based on the time of occurrence of a feature in the emitted pulse form envelope of the emitted pulsed light signal, and a stop time is associated to the receive signal, particularly based on the time of occurrence of a feature in the receive signal, wherein the same feature is in particular used as the feature associated to the start time, wherein the difference between the stop and start time is used for determining the distance to the target, wherein the distance measuring device is configured in such a way that the at least one pulsed light signal generated by the light generator is comprised of sub-pulses provided with a repetition rate of at least 1GHz, preferably 40GHz, wherein the sub-pulses contained in the pulsed light signal define (e.g. preserve) the pulse form envelope of the pulsed light signal.

The distance measuring device may also be used during constructions, for example to update a BIM (building information modeling) model.

The sub-structuring of the light pulse used for distance estimation with sub-pulses is beneficial as it improves the accuracy of distance information while enabling the use of the same reception electronics as would be used for processing and detecting of the light pulse in the absence of sub-structuring. Since light is only emitted by the sub-pulses, a better temporal localization of the photons is obtained. This better temporal localization of the photon distribution helps to reduce distance estimation noise. Chromatic and spatial errors of the optical pulse emitted to air generated by the laser source may also be reduced: The shorter the light pulses, the smaller theses systematic error sources. Since the distance information is additionally also encoded in the envelope of the received returned pulsed light signal, the receiver is in general unchanged compared to state-of-the-art solutions. With improved detection methods, it may also be possible to gain information from detecting individual sub-pulses. However, state-of-the-art photodetectors, such as SPADs or APDs, typically have only limited bandwidths below 5GHz.

In an embodiment of the invention, the pulsed light signal is generated through a modulation of a train of sub-pulses by a modulation signal provided by a modulator.

Modulation may be provided by a pulse picker as well. Modulation may e.g. be obtained through an electro-optic beam deflector, or through an electro-optic interferometer. The pulsed light signal may also be directly provided by a semiconductor device, for example a multi-segment quantum dot laser.

The emitted modulated signal with an improved temporal localization of the photons may be obtained by using a laser source with an internal ultra-high-speed intensity modulation. The laser source may emit sub-pulses with a frequency from 1GHz to 250GHz. The train of extremely thin needle-like sub-pulses may be modulated by the modulator to obtain the pulsed light signal. Each measurement radiation pulse is subdivided into needle-shaped sub-pulses with a typical duty-cycle of much less than 0.1.

The sub-pulses provided by the laser source may be extremely phase stable to guarantee a low time jitter below 1picosecond. Very low time jitters in the femtosecond range are generated by so called comb lasers inherently. Comb lasers with a pulse repetition frequency in the range of 1GHz up to 250GHz may therefore be used in an embodiment of the invention.

Different types of optoelectronic modulators may generate the modulation signal. Candidates for intensity modulation in the MHz range are Mach-Zehnder interferometers or acousto-optic modulators. By applying such an electro-optic modulator to the train of sub-pulses delivered by the light source, the emitted radiation may be characterized by a low photon noise regarding time interval jitter.

The modulation signal may be synchronized to the train of sub-pulses, in particular through a derived carrier frequency detection unit or the use of the same clock. The synchronization may help in the precise determination of start and stop times used for calculating the distance to the target. For rangefinder systems for which the start pulse is measured once initially or with lower frequency than the measurement rate, the following stop pulses may be referenced to the sparse start pulses. Such "hybrid" start-stop lidar systems may require a synchronization of the envelope modulation to the grid of sub-pulses. For a "hybrid" start-stop measurement configuration, an initial measurement of a start component of a first pulsed light signal is carried out and within a defined time interval the processing of stop components of subsequent pulsed light signals takes into account the initial measurement. Synchronization between envelopes and sub-pulses may be required for such a configuration. The modulation signal may be embodied in different ways, for example as a pulse wave, in particular as a square wave. The maximum value of the pulse wave may be set to one, and the minimum value of the pulse wave may be set to zero. If a steady train of sub-pulses would be modulated by such a pulse wave, those sub-pulses from the steady train of sub-pulses lying in the zero-region of the pulse wave would be removed by the modulation, while the other sub-pulses would pass unaltered. The main information used for distance estimation according to the invention is provided by the envelopes of the pulses. The envelopes of the pulses may be determined by the modulation signal. Signal processing electronics may then operate in a relaxed sampling and processing regime as all signals only need to be processed in such a way that information regarding the envelopes of the pulses is preserved. The signal processing electronics is therefore matched to the modulation signal and not to the train of sub-pulses.

In another embodiment of the invention, the modulation signal provided by the modulator is periodic, or the modulation signal provides a sequence of orthogonal pulse form envelopes, or the modulation signal provides temporal pulse coding, in particular using Barker codes.

The modulation signal may therefore be used to add structure to the train of sub-pulses. The structure may be simple, for example through the use of a periodic signal, or more complex, for example through the use of sequence modulation schemes.

In another embodiment of the invention, the signal processing electronics is configured in such a way as to provide a receive signal which is substantially similar to the pulse form envelope.

In another embodiment of the invention, the signal processing electronics is configured in such a way as to provide a receive signal with a spectrum substantially similar to the spectrum of the pulse form envelope.

The processing of the detected signal may be done in such a way as to facilitate the determination of a stop time from the receive signal obtained through the processing step. Since the stop time used according to the invention may be associated to the envelope of a pulse used for distance measurement, the receive signal may correspond to an envelope of the detected signal. Additional front-end electronics and the signal processing electronics may therefore extract the envelope of the pulse from the detected signal. Higher-frequency terms associated to the sub-pulses are removed by the photonic detector and/or the signal processing electronics such that the envelope of the modulated train of sub-pulses survives and is detected by the analog electronics of the receiving channel.

In another embodiment of the invention, the signal processing electronics provides a digitized receive signal to the evaluation unit, and the sampling frequency used during digitization is matched to the spectrum of the pulse form envelope.

If the pulse form envelope is a baseband signal, then the sampling frequency may be larger or equal to the Nyquist frequency of the pulse form envelope. If the pulse form envelope is embodied as a bandpass signal, the sampling frequency may be equal to or larger than the size of the spectral support of the pulse form envelope.

In another embodiment of the invention, the sub-pulses are either directly provided by the laser, in particular by a comb laser with mode locking providing sub-pulses with a repetition rate of at least 1GHz, or through the use of an additional resonator applied to a continuously emitting laser, for example through a nonlinear micro-resonator, e.g. a whispering gallery mode resonator with an optical amplification stage, applied to a continuously emitting laser, wherein the additional resonator modulates the continuously emitted laser light with a resonator modulation frequency of at least 1GHz, typically 50GHz. Whispering gallery mode resonators have the potential to generate pulse trains with a repetition rate up to 250GHz. Comb lasers may be beneficial as they are characterized by an extremely low time interval jitter between the individual pulses and a stable amplitude across generated sub-pulses.

Examples of comb lasers are passively mode-locked lasers, actively mode-locked lasers, VECSEL or mode-locked quantum dot laser diodes. Alternatively, laser sources which are not pulsed may be used, wherein the sub-pulses may be obtained through an additional external modulator applied to the laser source output. Pump lasers with a Whispering Gallery Mode (WGM) resonator may be used, or pump lasers with a WGM resonator and a subsequent optical amplifier. Other possible light sources may be Kerr-Soliton frequency comb lasers, or active mode-locked fiber lasers, or light sources generating squeezed light, or a segmented laser diode with a saturable absorber section.

In another embodiment of the invention, the width of the pulse form envelope is smaller than 10ns.

In another embodiment of the invention, the full duration at half maximum of a sub-pulse is smaller than 30ps.

In another embodiment of the invention, the ratio of the full duration at half maximum of a sub-pulse to the time between consecutive sub-pulses is larger than 0.0001 and smaller than 0.1, wherein the sub-pulses are in particular identical to each other.

In another embodiment of the invention, pulsed light signals are provided with a repetition rate larger than 1MHz and smaller than 100MHz. For multi-beam scanners with several measurement channels consisting of more than one laser source and more than one receiving photodetector, each measurement channel may be provided with a repetition rate larger than 1MHz and smaller than 100MHz. The overall repetition rate of the multi-beam scanner may be higher.

In another embodiment of the invention, the distance measuring device is configured to measure diffusively scattering targets which are 10 meters away from the distance measuring device with an estimated distance error standard deviation of at most 30um in a single measurement.

In another embodiment of the invention, the distance measuring device is configured to measure diffusively scattering targets which are 100 meters away from the distance measuring device with an estimated distance error standard deviation of at most 300um in a single measurement.

In another embodiment of the invention, the modulator generating the pulse form envelope is synchronized to the train of sub-pulses.

Synchronization may be especially beneficial in distance measurement systems where the start pulses are sparse.

In another embodiment of the invention, the synchronization is provided by measuring the phase of the train of sub-pulses with a light-sensitive sensor, wherein the measured phase is used for synchronization.

In another embodiment of the invention, the synchronization is provided by measuring the phase of the train of sub-pulses from the received pulsed light signal, wherein the measured phase is used for determining the distance to the target.

If the frequency of the sub-pulses is below 5GHz, it may be possible to measure the phase of the sub-pulses directly with an APD or a SPAD-array. The directly measured phase may be used for estimating the distance to the target.

The inventive system is described below in more detail purely by way of example with the aid of concrete exemplary embodiments illustrated schematically in the drawings, further advantages of the invention also being examined. Identical elements are labelled with the same reference numerals in the figures. In detail:
- Figure 1: shows a schematic illustration of measurement radiation pulses according to the state of the art;
- Figure 2a, b: show schematic illustrations of measurement radiation pulses according to the invention;
- Figure 3: shows photon events inside a sub-pulse;
- Figure 4: shows an embodiment of the distance measuring device according to the invention;
- Figure 5: shows an embodiment of the light generator according to the invention.

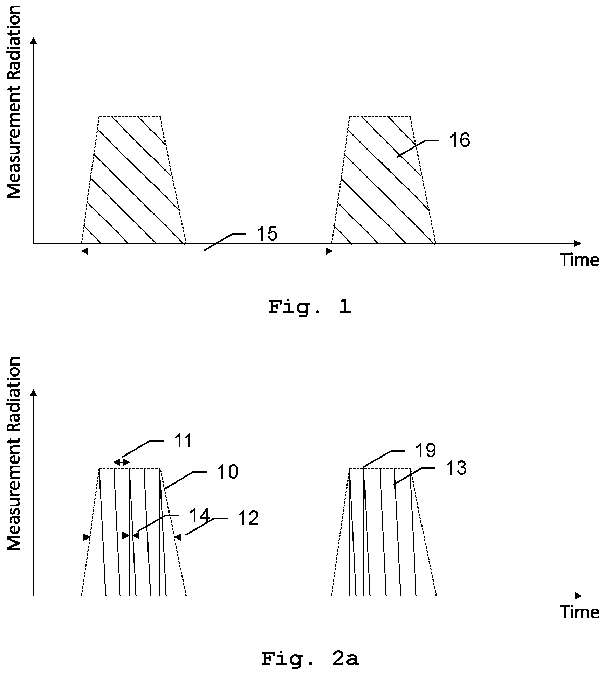

**Figure 1** shows a schematic illustration of a state of the art measurement radiation pattern for distance estimation via a pulsed time-of-flight principle. Temporally uniformly distributed measurement radiation pulses are generated, the measurement radiation pulses depending on the modulation scheme, wherein the time 15 between consecutive pulses is on the order of a few hundred nanoseconds. To resolve range ambiguity, i.e. when more than one measurement radiation pulse is in the air between instrument and target, the pulses may additionally be sub-structured, the sub-structuring depending on the modulation scheme. In Figure 1, the individual pulses are not sub-structured, the light in a measurement radiation pulse being continuously 16 emitted by a light generator. According to the inventive arrangement, the measurement radiation pulses are further sub-structured by a kind of ultra-high carrier modulation as described in the next figure.

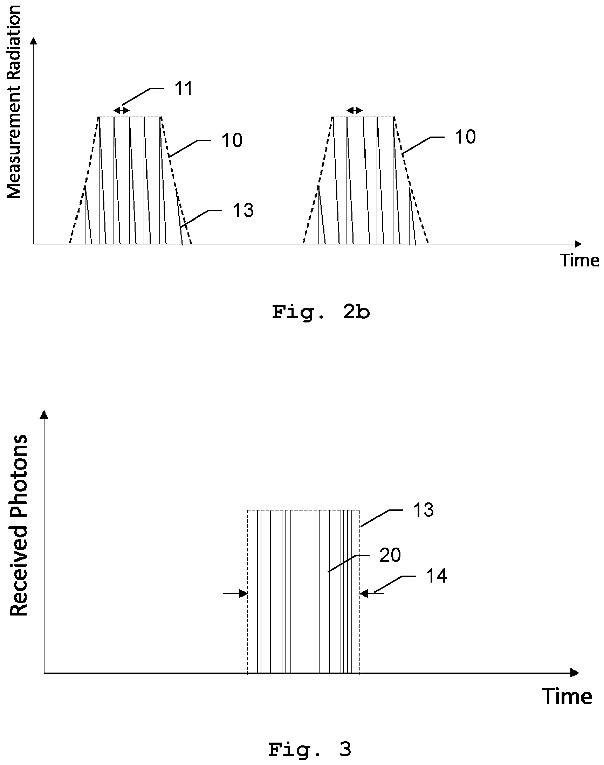

**Figures 2a** **and** **2b** show schematic illustrations of measurement radiation pulses 16 according to the invention. A measurement radiation pulse comprises a train of optical sub-pulses 13. The optical sub-pulses 13 are provided at equidistant time instances 11 of extremely low timing jitter. Each optical sub-pulse is characterized by a full duration at half maximum time 14. The optical sub-pulses 13 corresponding to a measurement radiation pulse are contained in an envelope 10. The envelope 10 has principally the length of the measurement radiation pulses 16 and is characterized by a full duration at half maximum time 12. The optical sub-pulses 13 contained in a measurement radiation pulse are extremely short in time (100 femtoseconds up to 30 picoseconds) so the photons are encapsulated in time bins, thereby lowering the time interval noise. The period of this train of sub-pulses is typically in the lower or middle GHz-range such that a number of such sub-pulses may be contained in the envelope 10. Furthermore, the period 11 of this GHz-frequency may be extremely clean, which means it has an extremely low timing jitter. The measurement radiation enclosed by the envelope 10 is used for measuring the distance to a target 5. The detector unit 8 obtains an envelope of the received measurement radiation pulse comprising all the rearranged photons and related energies from the incident received optical sub-pulses which is then used for obtaining distance information. Since the systematically grouped photons have reduced time interval noise, the timing jitter of the envelope 10 may also be reduced and the precision of the distance is increased. A measurement radiation pulse according to the invention may be characterized by the ratio of the full duration at half maximum time 14 of optical sub-pulses to the time 11 between sub-pulses 13 representing the duty-cycle, by the amplitude 19, and by the full duration at half maximum time 12 of the envelope 10. Different settings of these parameters affect the distance information uncertainty of the received signal. When the average amplitude is at a given value, for example, which is related to the total photon number within the envelope, then the shorter the width 14 of the sub-pulses, the lower the distance jitter. For the case where the peak amplitude 19 is fixed, then also the GHz-frequency of the pulse-train becomes relevant. Typically, the larger this carrier frequency, the lower the distance jitter. A physical source of this kind of noise is the granularity of the electromagnetic radiation, with the arrival of photons following a Poisson process. Amplitude jitter represents another noise source which is worth to be considered. The individual amplitudes 19 of the received sub-pulses 13 within the envelope 10 shown in Figure 2a may vary by a few percent which reduces the signal-to-noise ratio (SNR) of the detected and processed envelope. Mode-locked comb lasers have the advantage to emit pulse-trains at extremely stable GHz-rates of the order of 1 per mill at 1 nanosecond average time. The short-time amplitude or intensity noise may also possess desirable traits, even in case the comb lasers are non-stabilized. When expressed by relative intensity noise, the intensity variation may be around - 160dBc/Hz at frequencies above several GHz. This low noise level is achieved by the pulse-to-pulse optical phase coherence occurring in mode locked lasers.

The envelope 10 of the optical pulse train 13 is generated by a modulator or pulse picker 3. Figure 2a shows a modulation signal provided by a fast modulator unit whereas Figure 2b shows the envelope generated by a slower modulator for which the rise and fall time is slower than the period 11 such that some sub-pulses 13 have lower amplitudes. For the case of a "hybrid" start-stop measurement system, the modulation signal may be synchronized to the train of sub-pulses. This may assure that the sub-pulses 13 in the rise and fall time sections do not introduce any amplitude jitter to the modulation signal.

Distance measuring devices having long laser pulses 16 suffer from the so called spatial wave front error, wherein the pulse shape or pulse phase across the beam cross section is not constant, wherein typically the pulse shape is tilted to the axis of propagation. Depending on the shape and reflectivity of the object surface to be measured, the distance varies and introduces systematic errors to the measurement distance. When subdividing the emitted pulses into trains of sub-pulses, however, the spatial wave front error of each sub-pulse 13 and thus of the envelope 10 is reduced.

Another positive effect increasing the absolute accuracy of a distance measuring instrument is related to the optical speckles emerging from the backscattered radiation when irradiated by coherent laser light. The spectral modes of a laser emission are non-uniformly distributed in the emitted pulse, especially when the signal pulses are longer than 1 nanosecond. When the randomly reflected light from a diffusively reflecting surface is scattered back to the receiver unit of a range finder device, then a random fraction of the energy of the ensemble of modes is collected, so the individual timing of the modes is different from one detected pulse to the other when moving the laser beam over the target surface. This introduces a relevant distance jitter to the lidar measurement. For a distance measuring device according to the invention for which the pulses 16 are divided into a train of sub-pulses 13, all the longitudinal or spectral modes of the lasers are locked and separated into time slices of a length 14 such that the difference in timing is much smaller than the duration 14. As a result, all the speckles have the same precise timing information necessary for accurate distance measurements.

**Figure 3** shows the statistical electrical response of a photodetector, for example the output signal of a photon resolving detector such as a SPAD array, for the case of a received optical pulse having a rather low amplitude, as is typically the case for received pulses in range finding applications. The distribution of the photons may be completely uncorrelated, wherein the time intervals between the two consecutive single photons are independent from any detection events in the past. It is known from coherent or interferometric detection methods that the statistical distribution of the photon number or intensity in a coherent electromagnetic wave is sometimes limiting the sensitivity of the detection method. One known solution to reduce the detection noise is to change the statistical distribution of the electromagnetic field by squeezing the light.

Squeezing can stabilize either the phase or the amplitude of the electromagnetic wave and the light is designated as non-classical light. When stabilizing the amplitude inside a time interval, the squeezed light shows a reduced variance of the photon number. Indeed, such light has much lower intensity noise which is relevant for coherent detection methods, especially when the squeezed beam is used for the local oscillator. For the case of the present invention which is a "direct detection" method and thus different from "coherent detection", the degree of improvement obtainable from using squeezed light is much smaller. One benefit of the inventive arrangement is that the overall statistics of the photon distribution becomes regular also when assessed over the pulse envelope. By slicing the photon emission into packets, the emitted beam has the property of a regular sequence of bunches which is different to the well-known random photon-bunching of thermal light sources. For the distance measuring device according to the invention, the shot noise level is noticeably reduced when evaluating a sequence of sub-pulses.

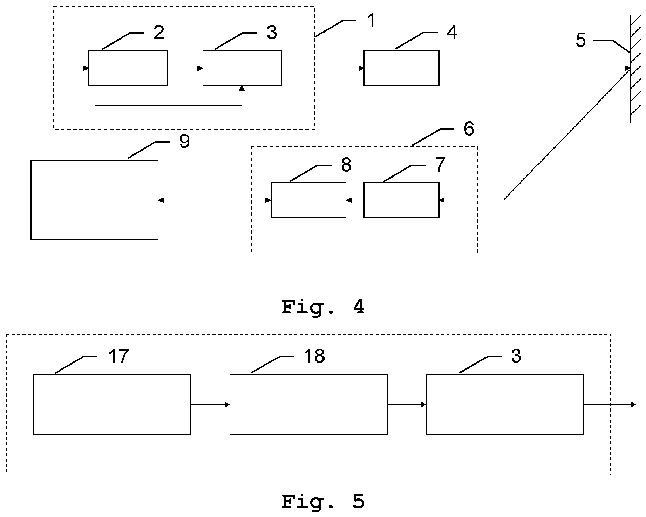

**Figure 4** shows an embodiment of the distance measuring device according to the invention. A light generator 1 generates measurement radiation pulses, wherein the term measurement radiation pulse can also be replaced by the term pulsed light signal. These measurement radiation pulses are then provided to a transmission channel 4. The transmission channel 4 comprises an optical system, for example, the optical system being used for focusing the measurement radiation pulses onto a target surface 5. The target 5 can be a surface of a metallic work piece at close range, for example 2m, or a retroreflector at long range, for example 1000m. Some of the measurement radiation impinging on the target surface 5 is reflected back and received by the receiving channel 7 of the distance measuring device. The receiving channel 7 is associated to a detector unit 8 comprising a detector and signal processing electronics downstream of the detector, the receiving channel comprising an optical system, for example, for focusing or guiding the returned measurement radiation pulses onto the detector. The detector unit 8 comprises at least one photo detector, for example an APD, CMOS, PIN, SPAD, SPAD-array or a photo multiplier. The signal processing electronics of the detector unit 8 comprises electronic filters for filtering the detected returned measurement radiation and an analog-to-digital converter, wherein the analog-to-digital converter samples at a sufficiently high sampling rate such that the relevant information is accurately digitized. Besides the receiving channel 7 and the detector unit 8, the receiving unit 6 may also comprise other components, for example a variable gain or attenuation unit for setting the optimum signal level, or an internal reference light path for calibration by defining a start time. Figure 4 does not show the time base unit defining the absolute time scale as used in every lidar device.

The detector unit 8 provides a digital output to a computing unit 9 controlling both the light generator 1 as well as the detector 8. The sampling frequency of the detector unit 8 and the resolution of the sampled signals (quantization) are matched to the frequencies of the envelopes of the measurement radiation pulses provided by the light generator 1. In the embodiment of the invention in Figure 1, the light generator 1 comprises a pulse train source 2, for example a mode-locked laser, which generates a comb like series of narrow pulses at a set of equidistant times. The optical pulse train provided by the pulse train source 2 is subsequently modulated by a modulation signal provided by a modulator or pulse picker 3. Different types of electronically controllable optical modulators with nanosecond or even sub-nanosecond switching times are known. Pulse pickers or modulators for telecom applications often make use of the Mach-Zehnder interferometer. Other modulators may multiply the optical pulse train with the modulation signal, for example, to form the measurement radiation pulses provided to the transmission channel 4.

The sub-pulses may be directly provided by the laser 2, in particular by a comb laser with mode locking providing sub-pulses with a repetition rate of typically 20GHz or 40GHz. 100GHz is also possible, for example if the duty cycle, the ratio between width and interval of the sub-pulses, is not larger than 0.1. Modern micro-comb-lasers consist of a nonlinear micro-resonator on a photonic chip where inside a circular resonator whispering gallery modes (WGM) are excited by a CW-laser-diode pump. By an inherent mode locking mechanism, these modes are phase-locked and generate so called solitons yielding the train of tight sub-pulses. Optionally downstream of the radiation path an optical amplification stage (OPA) can be applied for increasing the optical power. Whispering gallery mode resonators have the potential to generate pulse trains with a repetition rate of up to 250GHz. Comb lasers may be beneficial since they are characterized by extremely low amplitude jitter and by low time interval jitter between the sub-pulses.

There are alternative optical pulse train sources of miniaturized size which can be used, namely quantum-dot mode-locked lasers. Quantum-dot mode-locked lasers have emerged as a leading source for the efficient generation of high-quality optical pulses from a compact package, owing to characteristics such as low noise operation and high pulse peak power, in addition to the ability to modulate the output pulse train in temporal and if necessary in frequency domains in order to obtain hundreds of GHz pulse repetition rates. There are a lot of primary advantages of quantum dot lasers compared to other material systems for passive mode-locking in semiconductor lasers. Their two-section cavity structure, one for mode-locking and one for gain control, is the base technology for these very compact monolithic passively mode-locked laser. These lasers have a large temperature range and are insensitive to temperature fluctuations which is relevant for industrial and geodetic instruments.

These highly integrated semiconductor laser types based on quantum dot active media may be used as light source for the inventive distance measuring system. These laser types are able to generate trains of sub-pulses in the tens of GHz, wherein an envelope modulation signal can be applied to the gain section of the cavity to get the final modulation signal. These lasers are capable of high-speed operation at 1.05 µm, 1.3 µm, and 1.55um wavelengths and at temperatures from -20 °C to 70 °C. In comparison to the performance of strained quantum-well lasers of the past, the new quantum-dot lasers achieve significantly higher temperature stability.

The modulator 3 shapes the optical pulse train provided by the pulse train source 2 in such a way as to generate the measurement radiation pulses. The modulation signal may be periodic, wherein each period of the modulation signal may possess two disjoint regions, the union of which is equal to one period, wherein in the first region the modulation signal is nonzero and in the second region the modulation signal is zero. The detector unit 8 is configured to obtain the envelope from the received returned modulated optical pulse train, the extracted envelope provided in equidistantly sampled form to the computing unit 9. The sampling frequency of the detector unit 8 is therefore matched to the frequencies of the envelope of the modulated optical pulse train and not to the repetition rate of the optical pulse train. The computing unit 9 can be a field programmable gate array (FPGA) or a high-speed original equipment manufacturer integrated circuit (OEM-ASIC) for data handling and parameter extraction of relevant signal information in real-time. Data handling comprises correlation of time series, peak detection, sorting, calibration, ambiguity resolution and so on. Possible estimated target specific parameters per aiming direction are number of targets, amplitude, time-of-flight, pulse width, pulse deformation, signal to noise ratio, reflectivity of the target and distance jitter. Additional parameters may be deduced depending on the configuration of the selected measurement program.

The computing unit 9 additionally comprises control and process functionality, in that it may control at least one of the pulse train source 2, the modulator 3 and the analog-to-digital converter of the detector unit 8. The computing unit 9 may therefore obtain precise information about a start time at which a measurement radiation pulse was provided to the transmission channel 4, especially when the source 2 is an unstabilized free running comb laser. Such a start time is associated to a measurable property of the transmitted measurement radiation pulse, for example to a time at which the envelope of the modulated optical pulse train first crossed a pre-defined value, or to a time at which the envelope reached a maximum value etc. The same measurable property is measured in the sampled and quantized signal provided by the detector unit 8, the measurement providing a stop time. Using the difference of the stop time and the start time, the computing unit 9 may infer the distance to the target surface 5.

**Figure 5** shows a further embodiment of the light generator according to the invention. The wavelengths for lidar are in the visible, the near infrared, and the mid infrared region up to 14um. A preferred wavelength range is between 1um and 2um, where different commercial components are available, e.g. for telecom applications. Figure 5 shows a light source different from mode locked lasers. A continuous wave (CW) laser source 17 outputs an output beam which is not pulsed. A fiber-optic external modulator 18 driven by a signal provided by an electronic RF-driver, the RF driving signal having a spectral support lower bounded by 1GHz, for example, is used for externally modulating the output beam of the CW laser. The external modulator 18 applied to the CW laser output provides optical sub-pulses at a high repetition rate, e.g. at a rate of 50GHz. A modulator 3 can then be used for shaping the optical sub-pulses into measurement radiation pulses according to the invention. Modulation can be provided by an opto-electronic pulse picker having fast rise and fall times of much shorter duration than 1nsec, such that the train of optical sub-pulses is cut into packages defining the envelopes of typical lengths in the range of 1ns to 10ns and periodicity of 5us. It may be beneficial to synchronize the phases of the external modulator 18 and the envelope modulator 3. Depending on the configured modulation scheme or the activated measurement program of the distance measuring device, the modulation provides a sequence of periodic and uniformly long envelopes, or orthogonal pulse form envelopes, or any temporal pulse coding known in the field of lidar or radar, in particular using Barker codes.

It goes without saying that these figures illustrated are merely schematics of possible exemplary embodiments.

Although the invention is illustrated above, partly with reference to some preferred embodiments, it must be understood that numerous modifications and combinations of different features of the embodiments can be made. All of these modifications lie within the scope of the appended claims.

## Claims

1. Distance measuring device for geodetic or industrial distance measurement according to the pulse time-of-flight principle, the distance measuring device comprising
• a light generator (1) configured to emit at least one pulsed light signal to a target (5), wherein the pulsed light signal has a pulse form envelope (10),
• a receiving circuit (8) having a detector configured for detecting at least part of the light signal returning from the target (5), wherein a receive signal is extracted in such a way as to be comparable to the pulse form envelope (10), and
• an evaluation unit (9) configured for determining the time of flight of the pulsed light signal on the basis of the receive signal, wherein a start time is associated to the pulsed light signal, particularly based on the time of occurrence of a feature in the emitted pulse form envelope of the emitted pulsed light signal, and a stop time is associated to the receive signal, particularly based on the time of occurrence of a feature in the receive signal, wherein the same feature is in particular used as the feature associated to the start time, wherein the difference between the stop and start time is used for determining the distance to the target,
**characterized in that**
the distance measuring device is configured in such a way that the at least one pulsed light signal generated by the light generator (1) is comprised of sub-pulses (13) provided with a repetition rate of at least 1GHz, wherein the sub-pulses (13) contained in the pulsed light signal preserve the pulse form envelope (10) of the pulsed light signal.

2. Distance measuring device according to claim 1,
**characterized in that**
the pulsed light signal is generated through a modulation of a train of sub-pulses by a modulation signal provided by a modulator (3).

3. Distance measuring device according to claim 2,
**characterized in that**
the modulation signal provided by the modulator (3) is periodic, or the modulation signal provides a sequence of orthogonal pulse form envelopes (10), or the modulation signal provides temporal pulse coding, in particular using Barker codes.

4. Distance measuring device according to any of the preceding claims,
**characterized in that**
the sub-pulses are either directly provided by the laser (2), in particular by a comb laser with mode locking providing sub-pulses with a repetition rate of at least 1GHz, or through the use of an additional resonator applied to a continuously emitting laser (17), for example through a nonlinear micro-resonator (18) applied to a continuously emitting laser (17), wherein the additional resonator transforms the continuously emitted laser light with a resonator modulation frequency of at least 1GHz, typically 50GHz.

5. Distance measuring device according to any of the preceding claims,
**characterized in that**
the receiving circuit (8) comprises signal processing electronics downstream from the detector for filtering the detected light signal to provide a receive signal, wherein the signal processing electronics is configured in such a way as to provide a receive signal which is substantially similar to the pulse form envelope (10).

6. Distance measuring device according to claim 5,
**characterized in that**
the signal processing electronics is configured in such a way as to provide a receive signal with a spectrum substantially similar to the spectrum of the pulse form envelope (10).

7. Distance measuring device according to any of the preceding claims,
**characterized in that**
the signal processing electronics provides a digitized receive signal to the evaluation unit (9), and the sampling frequency used during digitization is matched to the spectrum of the pulse form envelope (10).

8. Distance measuring device according to any of the preceding claims,
**characterized in that**
the width of the pulse form envelope (12) is smaller than 10ns.

9. Distance measuring device according to claim 8,
**characterized in that**
the full duration at half maximum (14) of a sub-pulse is smaller than 30ps.

10. Distance measuring device according to any of the preceding claims,
**characterized in that**
the ratio of the full duration at half maximum (14) of a sub-pulse to the time between consecutive sub-pulses (11) is larger than 0.0001 and smaller than 0.1.

11. Distance measuring device according to any of the preceding claims,
**characterized in that**
pulsed light signals are provided with a repetition rate larger than 1MHz and smaller than 100MHz.

12. Distance measuring device according to any of the preceding claims,
**characterized in that**
the distance measuring device is configured to measure diffusively scattering targets (5) which are 10 meters away from the distance measuring device with an estimated distance error standard deviation of at most 30um in a single measurement.

13. Distance measuring device according to any of the preceding claims,
**characterized in that**
the modulator (3) generating the pulse form envelope is synchronized to the train of sub-pulses.

14. Distance measuring device according to claim 13,
**characterized in that**
synchronization is provided by measuring the phase of the train of sub-pulses with a light-sensitive sensor, wherein the measured phase is used for synchronization.

15. Distance measuring device according to claim 13,
**characterized in that**
synchronization is provided by measuring the phase of the train of sub-pulses from the received pulsed light signal, wherein the measured phase is used for determining the distance to the target.
